# FASCICULE DE BREVET EUROPEEN

(11) **EP 1 649 233 B1**
(45) Date de publication et mention de la délivrance du brevet: **29.08.2007**
(21) Numéro de dépôt: 04766177.2
(22) Date de dépôt: 09.07.2004
(51) Int. Cl.: F41G 1/32, G02B 23/12, G02B 27/14

(54) **LUNETTE DE TIR DE VISION NOCTURNE A DEUX OCULAIRES**
NACHTSICHT-ZIELVISIER MIT ZWEI OKULAREN
NIGHT VISION AIMING SIGHT WITH TWO EYEPIECES

(30) Priorité: 25.07.2003 FR 0309165
(43) Date de publication de la demande: 26.04.2006
(73) Titulaire: Thales, 92200 Neuilly Sur Seine (FR)
(72) Inventeur: NARCY, Gabriel, 94117 Arcueil Cedex (FR); ESPIE, Jean-Luc, 94117 Arcueil Cedex (FR)
(74) Mandataire: Bréda, Jean-Marc
(86) Numéro de dépôt international: PCT/EP2004/051438
(87) Numéro de publication internationale: WO 2005/017441

(56) Documents cités:
- EP-A- 0 777 142
- EP-A- 1 235 095
- CA-A- 2 330 867
- US-H- H1 891

## Description

Le domaine de l'invention est celui des lunettes de tir à intensificateur de lumière pour arme à feu.

Le document USH1891H H fournit une base à la revendication 1.

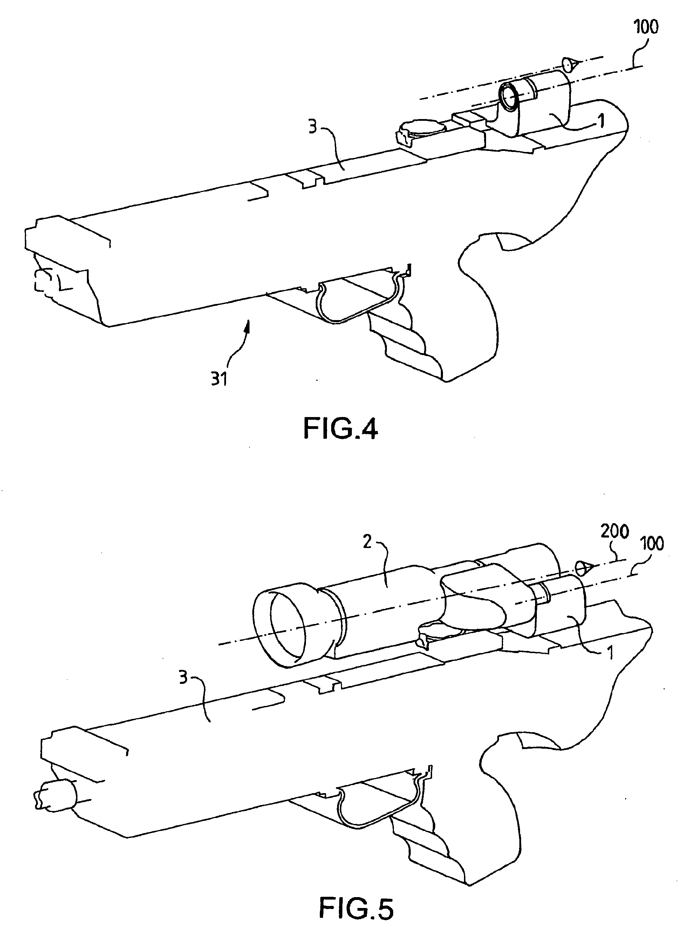

Il est primordial qu'un fantassin conserve de très bonnes capacités de progression dans toutes ses configurations de mission et particulièrement lorsqu'il évolue en zone urbaine. Lorsqu'il vise avec son arme, il peut devenir une cible potentielle. Pour pallier cet inconvénient, on dispose sur le canon de l'arme une caméra vidéo qui peut être, par exemple, à capteurs CCD (Charge Coupled Device). Cette caméra est couplée soit à un viseur de casque positionné sur le casque du fantassin, soit à un imageur positionné, par exemple, sur son poignet. Ce dispositif permet au fantassin de prendre une visée déportée de la cible et par conséquent de tirer tout en restant protégé. Cependant, la configuration de tir la plus utilisée reste toutefois celle où le fantassin prend une visée directe à l'oeil nu de la cible. La caméra doit donc être suffisamment petite et déportée de l'axe de visée pour ne pas gêner cette configuration de tir classique. Cette configuration est illustrée en figure 4 représentant une vue en perspective du système arme-caméra. L'axe de visée 100 de la caméra 1 est déporté de l'axe de visée 200 du fantassin de façon à lui assurer une visée correcte sans être gêné par la caméra.

Pour assurer les missions de nuit, classiquement, on adapte sur l'arme une lunette de vision nocturne. Cette lunette comporte généralement au moins un objectif, un dispositif à intensificateur de lumière et un oculaire. L'objectif forme une image du paysage extérieur sur la fenêtre d'entrée du dispositif à intensificateur. Celui-ci comporte trois parties principales : une première surface photosensible qui convertit l'image optique en image électronique, un dispositif à amplification d'électrons qui amplifie l'image électronique, une seconde surface qui reconvertit l'image électronique en image lumineuse amplifiée. Ainsi, l'image du paysage extérieur est amplifiée puis collimatée à l'infini par l'oculaire pour être finalement observée par le fantassin. Dans ce cas, bien entendu, l'image fournie par la caméra est perdue, les niveaux lumineux étant trop faibles pour permettre une image correcte avec les capteurs actuels. On perd ainsi la sécurité assurée par la caméra lors des missions de jour. Il faut rappeler que le fantassin peut être localisé de nuit par des combattants disposant soit de jumelles à intensificateur de lumière soit de caméras thermiques.

La lunette de vision nocturne selon l'invention permet au fantassin de conserver la même sécurité de tir de jour comme de nuit, le principe étant de fournir simultanément au fantassin et à la caméra la même image intensifiée qui peut ainsi être soit regardée directement soit à travers un viseur de casque ou un afficheur. Pour les missions de nuit, cette lunette s'adapte facilement sur l'arme sans modifications de la caméra déjà en place. On évite ainsi au fantassin en situation de combat de faire des manipulations mécaniques complexes.

Plus précisément, l'invention a pour objet une lunette de tir pour arme à feu comportant un objectif et un intensificateur d'images disposés dans un ensemble mécanique comportant une interface de fixation sur ladite arme, ledit objectif formant l'image du paysage extérieur sur la fenêtre d'entrée de l'intensificateur d'images, ladite arme comportant une caméra de visée montée sur l'arme et dont l'axe optique est parallèle à l'axe de son canon, ladite lunette comportant également au moins :
- Une première voie optique donnant de l'image intensifiée issue de l'intensificateur d'images une première image collimatée,
- Une seconde voie optique donnant de l'image intensifiée issue de l'intensificateur d'images une seconde image également collimatée dont l'axe optique est parallèle à l'axe optique de la première voie optique.
disposées de telle sorte que, la lunette étant montée sur l'arme par son interface de fixation, la première image est envoyée vers l'objectif de la caméra et la seconde image est envoyée vers l'oeil du fantassin portant l'arme.
Avantageusement, la première voie optique comporte au moins une optique de reprise d'images de l'image intensifiée issue de l'intensificateur d'images, une lame semi-réfléchissante, une première optique-relais et un premier oculaire, l'image finale issue du premier oculaire étant sensiblement collimatée et la pupille de sortie de la dite première voie optique étant sensiblement confondue avec la pupille d'entrée de l'objectif de la caméra lorsque la lunette est montée sur l'arme. Et, la seconde voie optique comporte au moins l'optique de reprise d'images de l'image intensifiée issue de l'intensificateur d'images, la lame semi-réfléchissante, une seconde optique-relais et un second oculaire, l'image finale issue du second oculaire étant sensiblement collimatée et la pupille de sortie de la dite seconde voie optique étant suffisamment éloignée du corps de la lunette, de la caméra et de l'arme de telle sorte que le fantassin puisse positionner son oeil dans ladite pupille sans gêne importante.
Avantageusement, la lunette comporte également une troisième voie optique comportant un micro-display composé au moins d'un afficheur et d'un second objectif de reprise d'images formant une image intermédiaire de l'image issue de l'afficheur, ladite image intermédiaire étant envoyée par réflexion et par transmission par la lame semi-réfléchissante d'une part sur la première voie optique et d'autre part sur la seconde voie optique en superposition sur l'image intensifiée issue de l'intensificateur d'images.

L'invention sera mieux comprise et d'autres avantages apparaîtront à la lecture de la description qui va suivre donnée à titre non limitatif et grâce aux figures annexées parmi lesquelles :
La figure 1 représente une vue schématique de la lunette de tir de vision nocturne selon l'invention.
La figure 2 représente ladite lunette de tir de la figure 1 montée sur l'arme.
La figure 3 représente une vue en coupe d'une réalisation possible de la lunette selon l'invention.
Les figures 4 et 5 représentent deux vues en perspective d'une arme avec et sans la lunette de tir selon l'invention.
La figure 6 représente une vue schématique d'une variante de la lunette de tir comportant une troisième voie optique possédant un micro-display.
La figure 7 représente une vue en coupe d'une réalisation possible de la variante de la lunette schématisée en figure 6.

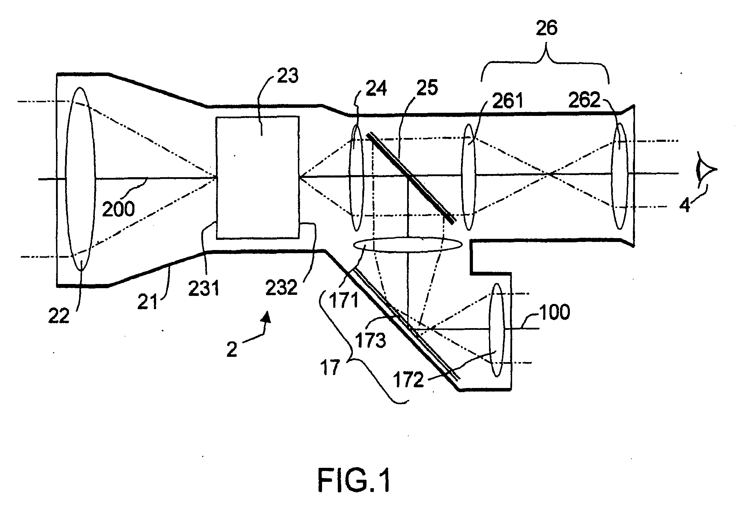

La figure 1 représente une vue schématique de la lunette de tir 2 de vision nocturne selon l'invention. Le cheminement des rayons lumineux issus d'un point objet situé à l'infini sur l'axe optique de la lunette est indiqué par des traits pointillés, permettant ainsi de suivre les différentes focalisations et collimations des rayons lumineux à travers les différentes optiques de la lunette de tir.
Celle-ci comporte un objectif 22 qui forme du paysage extérieur une image sur la fenêtre d'entrée 231 d'un dispositif à intensificateur d'images 23. Celui-ci donne sur sa fenêtre de sortie 232 une image intensifiée inversée. Deux voies optiques placées derrière l'intensificateur 23 donnent chacune une image collimatée. Ces deux voies optiques ont une partie commune constituée d'une optique de reprise d'images 24 et d'une lame semi-réfléchissante 25.
L'optique de reprise 24 fournit une première image de l'image intensifiée provenant de l'intensificateur 23. Sur la figure 1, la lame semi-réfléchissante 25 réfléchit une partie de la dite image vers une première voie optique et transmet l'autre partie vers la seconde voie optique. La lame semi-réfléchissante est une lame à faces planes et parallèles. Son traitement est adapté en fonction de la voie optique que l'on souhaite privilégier. Bien entendu, les voies optiques pourraient être inversées.
La partie spécifique 17 de la première voie optique comporte essentiellement une première optique-relais 171, un miroir plan 173 et un oculaire 172. La première optique-relais focalise l'image provenant de l'optique 24 au foyer de l'oculaire 172 qui donne une image finale à l'infini. Le miroir plan 173 permet de replier les faisceaux optiques de façon que l'axe optique 100 de l'oculaire soit parallèle à l'axe de visée 200 de la seconde voie optique.
Classiquement, le grossissement optique de la première voie optique est égal au rapport des focales de l'objectif 22 et de l'oculaire 172 divisé par le grandissement de l'ensemble optique de reprise 24 - optique-relais 171.
La partie spécifique 26 de la seconde voie optique comporte essentiellement une seconde optique-relais 261 et un oculaire 262. La seconde optique-relais focalise l'image provenant de l'optique 24 au foyer de l'oculaire 262 qui donne une image finale à l'infini. La pupille de la seconde voie optique est disposée de telle sorte que son image à travers les différents éléments optiques 24, 261 et 262 soit suffisamment éloignée de l'optique 262 afin que l'oeil 4 du fantassin puisse se positionner dans cette pupille sans gêne importante. L'oculaire peut être muni d'un réglage dioptrique de façon à optimiser le confort de visée du fantassin.
Classiquement, le grossissement optique de la seconde voie optique est égal au rapport des focales de l'objectif 22 et de l'oculaire 262 divisé par le grandissement de l'ensemble optique de reprise 24 - optique-relais 261.
Les différentes faces des lentilles sont traitées anti-réfléchissantes pour optimiser la transmission lumineuse et diminuer les images parasites dues aux réflexions multiples.
Il est à noter que la configuration optique de la seconde voie optique permet d'obtenir une image perçue par le fantassin dans le même sens que l'image directe du paysage extérieur lorsque l'on utilise un intensificateur de lumière simple, c'est-à-dire sans dispositif inverseur d'images, ce qui n'est pas le cas lorsque l'on utilise, par exemple, des jumelles de vision de nuit où nécessairement, l'intensificateur doit comporter un dispositif inverseur d'images. Cette configuration simplifie la réalisation de la lunette et diminue son coût.
L'ensemble des différents éléments optiques est disposé dans un ensemble mécanique 21 qui assure leur maintien et leur protection, la lunette 2 devant être utilisée en environnement militaire dans des conditions de température et d'environnement (humidité, pluie, ...) extrêmes. Cette ensemble mécanique possède une interface de fixation non représentée sur le schéma. Cette interface de fixation permet de fixer la lunette de tir sur une arme 31 et ne présente pas de particularités propres à la lunette selon l'invention.

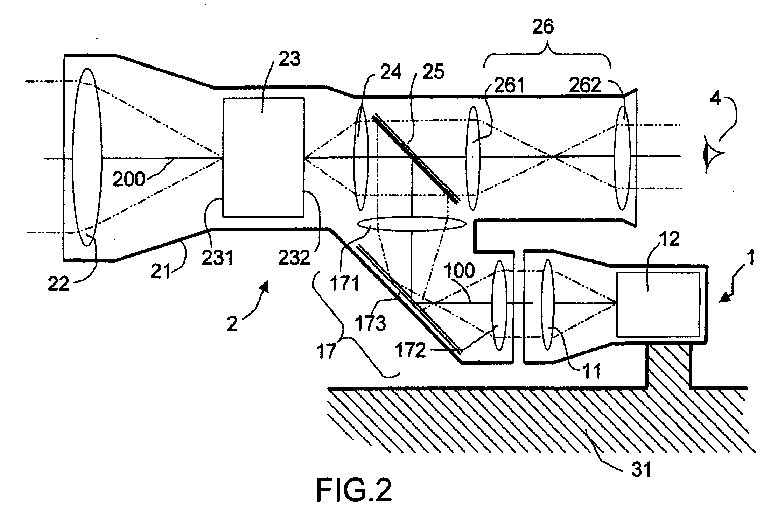

La figure 2 représente le schéma de la lunette de tir monté sur une arme 31. Sur l'arme 31, une caméra 1 est montée comprenant un objectif 11 et un capteur 12 qui peut être notamment un capteur CCD. Lorsque la lunette est montée sur l'arme, la première voie optique se trouve placée devant l'objectif de la caméra, l'axe optique 100 de la première voie optique se trouvant confondu avec l'axe optique dudit objectif. La pupille de sortie de la première voie optique est sensiblement confondue avec la pupille d'entrée de l'objectif 11 de la caméra 1 de façon que la transmission optique de l'image soit optimale sans diaphragmation du champ optique.

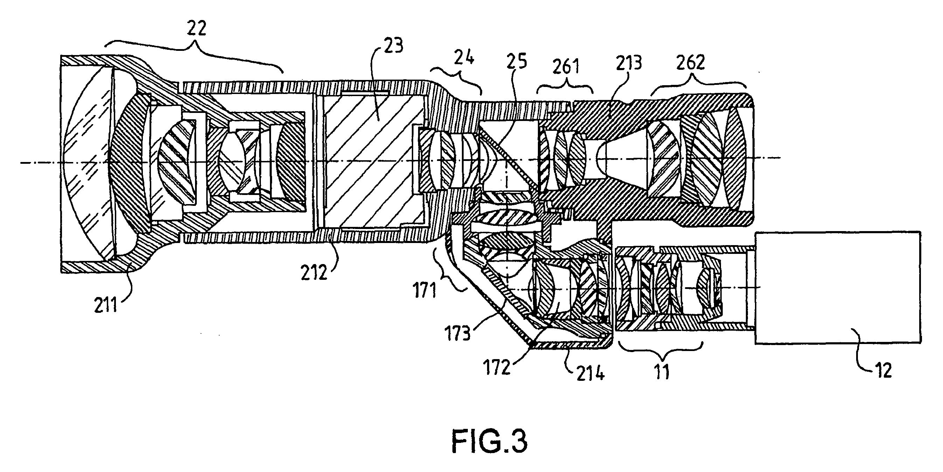

La figure 3 représente une vue en coupe d'une réalisation possible de la lunette selon l'invention. L'ensemble mécanique 21 comprend un corps principal 212 qui porte l'intensificateur de lumière 23, l'optique de reprise d'images 24 et la lame semi-réfléchissante 25. Sur ce corps principal sont montés :
- un second corps 211 portant l'objectif 22. Sur la figure 3, cet objectif comprend 4 groupes de lentilles pour un total de 7 lentilles.
- Un troisième corps 213 portant la seconde optique-relais 261 et l'oculaire 262. Ce troisième corps peut comporter un réglage en translation permettant le réglage dioptrique de l'oculaire 262. Sur la figure 3, la seconde optique-relais comporte 3 lentilles convergentes et l'oculaire comporte 3 groupes optiques pour un total de 4 lentilles.
- Un quatrième corps 214 portant le bloc optique 171, 172 et 173 de la première voie. La première optique-relais comporte 3 lentilles et l'oculaire 172 comporte 4 lentilles.
Cette conception modulaire permet de pouvoir modifier un des éléments, par exemple de changer l'objectif 22 ou de modifier l'interface de fixation en fonction de l'arme choisie sans à avoir à refaire toute la conception opto-mécanique de la lunette de tir.
Dans cet exemple, l'objectif 11 placé devant le capteur de la caméra est un objectif à 6 lentilles.

La figure 4 est une vue en perspective de l'arme portant sa caméra de visualisation 1 sans la lunette de tir de vision de nuit. L'axe 100 de visée de cette caméra est parallèle à l'axe de visée de l'arme. La caméra est de petite dimension et déportée de l'axe de visée pour ne pas gêner la visée directe du fantassin. Cette configuration permet l'utilisation de jour de l'arme. La figure 5 est une vue en perspective de l'arme de la figure 4 comportant cette fois la lunette 2 (en traits gras sur la figure). La lunette est disposée de telle sorte que la première voie optique est positionnée devant l'objectif de la caméra. La pupille de sortie de la seconde voie optique est suffisamment éloignée du corps de la lunette, de la caméra et de l'arme de telle sorte que le fantassin puisse positionner son oeil dans ladite pupille sans gêne importante.

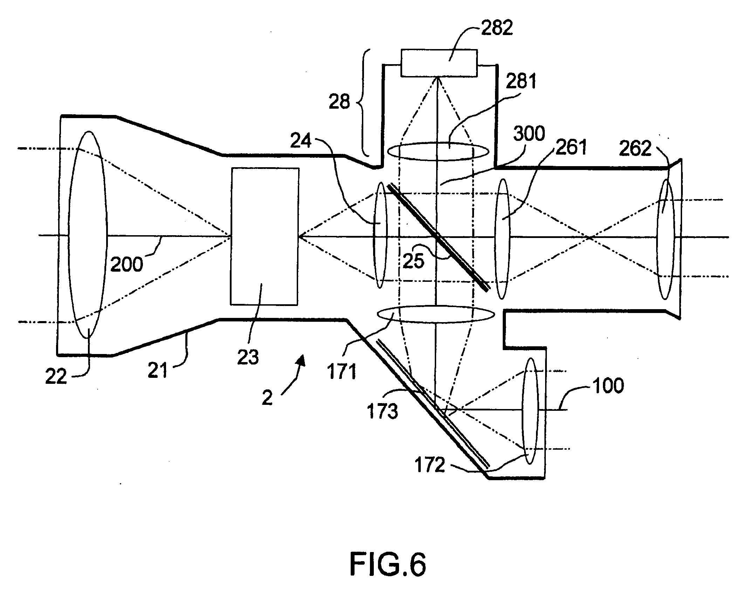

La figure 6 présente une variante de la lunette de tir selon l'invention. L'objet de cette variante est d'ajouter sur la voie libre de la lame semi-réfléchissante 25 une image provenant d'un afficheur 282. On ajoute ainsi au-dessus de la lame semi-réfléchissante 25 un ensemble 28 constitué d'un afficheur 282 et d'une seconde optique de reprise d'images 281 qui forme une image intermédiaire de l'afficheur 282. Cette image intermédiaire se superpose après réflexion sur la lame semi-réfléchissante 25 à l'image intensifiée provenant de l'intensificateur d'images 23. Par conséquent, le fantassin voit dans l'oculaire 262 les indications provenant de l'afficheur superposées à l'image intensifiée du paysage extérieur. Ces informations parviennent également à la caméra par transmission à travers la lame semi-réfléchissante. Les bandes spectrales d'émission de l'afficheur et du tube intensificateur peuvent être différentes. Dans ce cas, les coefficients de réflexion et de transmission de la lame semi-réfléchissante peuvent être différents selon la bande spectrale de façon à privilégier différemment la première voie optique ou la seconde voie optique pour chacune des deux images. Les indications fournies par l'afficheur peuvent être notamment des réticules de visée. A titre d'exemple non limitatif, l'afficheur 282 peut être un afficheur à cristaux liquides ou un dispositif d'affichage à micro-miroirs.

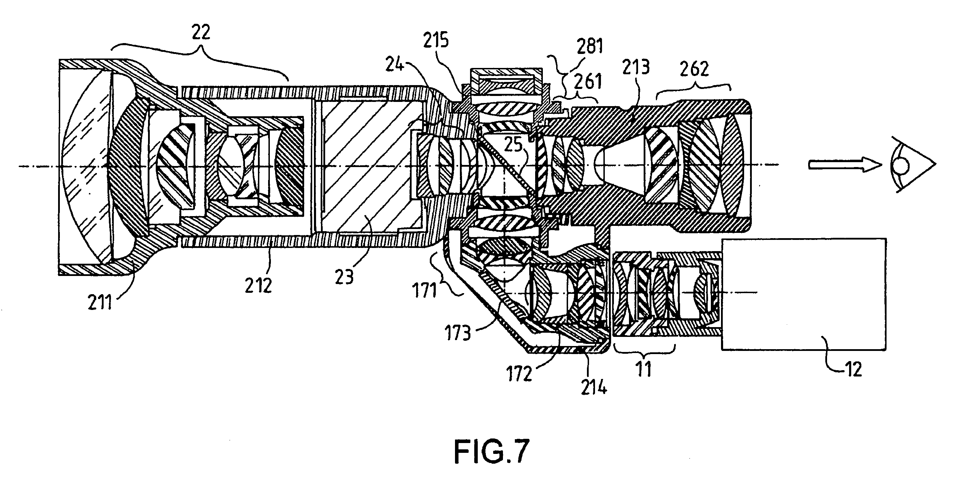

La figure 7 représente une vue en coupe d'une réalisation possible de la variante de la lunette 2 décrite en figure 6. La conception de cette lunette est voisine de celle représentée en figure 3. Le corps principal 212 a simplement été modifié dans sa partie située au-dessus de la lame semi-réfléchissante de façon à loger la pièce mécanique 215 qui porte l'objectif 281. L'afficheur 282 n'est pas représenté sur cette figure. Si les tailles de la fenêtre de sortie de l'intensificateur 23 et de l'afficheur 282 sont voisines ou identiques, la première optique de reprise d'images 24 et la seconde optique de reprise d'images 281 sont choisies identiques afin de simplifier la conception de la lunette, comme illustré en figure 7 où ces deux optiques présentent la même combinaison optique à 3 lentilles.

## Revendications

1. Lunette de tir (2) pour arme à feu (31) comportant un objectif (22) et un intensificateur d'images (23) disposés dans un ensemble mécanique (21) comportant une interface de fixation sur ladite arme, ledit objectif formant l'image du paysage extérieur sur la fenêtre d'entrée (231) de l'intensificateur d'images (23), ladite arme (31) comportant une caméra de visée (1) montée sur l'arme (31) et dont l'axe optique est parallèle à l'axe de son canon (3), ladite lunette comportant au moins:
• Une première voie optique (24, 25, 17) donnant de l'image intensifiée issue de l'intensificateur d'images (23) une première image collimatée,
• Une seconde voie optique (24, 25, 26) donnant de l'image intensifiée issue de l'intensificateur d'images (23) une seconde image également collimatée dont l'axe optique (200) est parallèle à l'axe optique (100) de la première voie optique.
disposées de telle sorte que, la lunette (2) étant montée sur l'arme (31) par son interface de fixation, la première image est envoyée vers l'objectif de la caméra (1) et la seconde image est envoyée vers l'oeil (4) du fantassin portant l'arme.

2. Lunette de tir selon la revendication 1 **caractérisée en ce que** la première voie optique comporte au moins une optique de reprise d'images (24) de l'image intensifiée issue de l'intensificateur d'images (23), une lame semi-réfléchissante (25), une première optique-relais (171) et un premier oculaire (172), l'image finale issue du premier oculaire (172) étant sensiblement collimatée et la pupille de sortie de la dite première voie optique étant sensiblement confondue avec la pupille d'entrée de l'objectif (11) de la caméra (1) lorsque la lunette est montée sur l'arme.

3. Lunette de tir selon la revendication 1 **caractérisée en ce que** la seconde voie optique comporte au moins l'optique de reprise d'images (24) de l'image intensifiée issue de l'intensificateur d'images (23), la lame semi-réfléchissante (25), une seconde optique-relais (261) et un second oculaire (262), l'image finale issue du second oculaire étant sensiblement collimatée et la pupille de sortie de la dite seconde voie optique étant suffisamment éloignée du corps de la lunette(21), de la caméra (1) et de l'arme (31) de telle sorte que le fantassin puisse positionner son oeil (4) dans ladite pupille sans gêne importante.

4. Lunette de tir selon les revendications 2 ou 3 **caractérisée en ce que** la lame semi-réfléchissante est utilisée en réflexion sur la première voie optique et en transmission sur la seconde voie optique.

5. Lunette de tir selon les revendications 2 ou 3 **caractérisée en ce que** la lame semi-réfléchissante est utilisée en transmission sur la première voie optique et en réflexion sur la seconde voie optique.

6. Lunette de tir selon l'une des revendications précédentes **caractérisée en ce que** l'intensificateur d'images est du type à inversion d'images.

7. Lunette de tir selon l'une des revendications précédentes **caractérisée en ce que** la lunette comporte également une troisième voie optique comportant un micro-display (28) composé au moins d'un afficheur (282) et d'un troisième objectif de reprise d'images (281) formant une image intermédiaire de l'image de l'afficheur (282), ladite image intermédiaire étant envoyée par réflexion et par transmission par la lame semi-réfléchissante d'une part sur la première voie optique et d'autre part sur la seconde voie optique en superposition sur l'image intensifiée issue de l'intensificateur d'images (23).

## Claims

1. Aiming sight (2) for a weapon (31), comprising an objective (22) and an image intensifier (23), these being placed in a mechanical assembly (21) having an interface for fastening on to said weapon, said objective forming the image of the external scenery on the entrance window (231) of the image intensifier (23), said weapon (31) including a sight camera (1) mounted on the weapon (31) and whose optical axis is parallel to the axis of its barrel (3), said sight comprising at least:
• a first optical channel (24, 25, 17) giving, from the intensified image coming from the image intensifier (23), a first collimated image; and
• a second optical channel (24, 25, 26) giving, from the intensified image coming from the image intensifier (23), a second image which is also collimated, the optical axis (200) of which is parallel to the optical axis (100) of the first optical channel,
these channels being arranged in such a way that, when the sight (2) is mounted on the weapon (31) via its fastening interface, the first image is sent to the objective of the camera (1) and the second image is sent to the eye (4) of the soldier carrying the weapon.

2. Aiming sight according to Claim 1, **characterized in that** the first optical channel comprises at least one image transfer optic (24) for the intensified image coming from the image intensifier (23), a semireflecting plate (25), a first relay optic (171), a first eyepiece (172), the final image from the first eyepiece (172) being substantially collimated and the exit pupil of said first optical channel being substantially coincident with the entrance pupil of the objective (11) of the camera (1) when the sight is mounted on the weapon.

3. Aiming sight according to Claim 1, **characterized in that** the second optical channel comprises at least the image transfer optic (24) for the intensified image coming from the image intensifier (23), the semireflecting plate (25), a second relay optic (261), and a second eyepiece (262), the final image from the second eyepiece being substantially collimated and the exit pupil of said second optical channel being sufficiently far from the body of the sight (21), from the camera (1) and from the weapon (31) in such a way that the soldier can position his eye (4) in said pupil with no great trouble.

4. Aiming sight according to either of Claims 2 and 3, **characterized in that** the semireflecting plate is used in reflection in the first optical channel and in transmission in the second optical channel.

5. Aiming sight according to either of Claims 2 and 3, **characterized in that** the semireflecting plate is used in transmission in the first optical channel and in reflection in the second optical channel.

6. Aiming sight according to one of the preceding claims, **characterized in that** the image intensifier is of the image inversion type.

7. Aiming sight according to one of the preceding claims, **characterized in that** the sight also includes a third optical channel comprising a microdisplay (28) composed of at least one display (282) and of a third image transfer objective (281) forming an intermediate image of the display (282), said intermediate image being sent by reflection and by transmission by the semireflecting plate on the one hand, into the first optical channel and, on the other hand, into the second optical channel superimposed on the intensified image from the image intensifier (23).

## Patentansprüche

1. Zielvisier (2) für eine Feuerwaffe (31), umfassend ein Objektiv (22) und einen Bildverstärker (23), die in einer mechanischen Einheit (21) angeordnet sind, umfassend eine Schnittstelle zur Befestigung an der Waffe, wobei das Objektiv das Bild der äu-ßeren Landschaft auf dem Eingangsfenster (231) des Bildverstärkers (23) bildet, wobei die Waffe (31) eine Sichtkamera (1) umfasst, die auf der Waffe (31) befestigt ist und deren optische Achse parallel zur Achse ihres Laufs (3) ist, wobei das Visier mindestens umfasst:
- einen ersten optischen Weg (24, 25, 17), der von dem verstärkten Bild, das aus dem Bildverstärker (23) kommt, ein erstes kollimiertes Bild wiedergibt,
- einen zweiten optischen Weg (24, 25, 26), der von dem verstärkten Bild, das aus dem Bildverstärker (23) kommt, ein zweites ebenfalls kollimiertes Bild wiedergibt, dessen optische Achse (200) zur optischen Achse (100) des ersten optischen Weges parallel ist,
die derart angeordnet sind, dass, da das Visier (2) auf der Waffe (31) mit seiner Befestigungsschnittstelle montiert ist, das erste Bild zu dem Objektiv der Kamera (1) und das zweite Bild zum Auge (4) des die Waffe tragenden Infanteristen gesandt wird.

2. Zielvisier nach Anspruch 1, **dadurch gekennzeichnet, dass** der erste optische Weg mindestens eine Bildaufnahmeoptik (24) für das verstärkte Bild, das aus dem Bildverstärker (23) kommt, ein halb reflektierendes Blättchen (25), eine erste Relais-Optik (171) und ein erstes Okular (172) umfasst, wobei das aus dem ersten Okular (172) kommende endgültige Bild im Wesentlichen kollimiert ist und die Ausgangspupille des ersten optischen Weges im Wesentlichen mit der Eingangspupille des Objektivs (11) der Kamera (1) zusammenfällt, wenn das Visier auf der Waffe montiert ist.

3. Zielvisier nach Anspruch 1, **dadurch gekennzeichnet, dass** der zweite optische Weg mindestens die Bildaufnahmeoptik (24) des verstärkten Bildes, das aus dem Bildverstärker (23) kommt, das halb reflektierende Blättchen (25), eine zweite Relais-Optik (261) und ein zweites Okular (262) umfasst, wobei das endgültige aus dem zweiten Okular kommende Bild im Wesentlichen kollimiert ist und die Ausgangspupille des zweiten optischen Weges ausreichend vom Körper des Visiers (21), von der Kamera (1) und von der Waffe (31) entfernt ist, so dass der Infanterist sein Auge (4) in der Pupille ohne wesentliche Beeinträchtigung anordnen kann.

4. Zielvisier nach den Ansprüchen 2 oder 3, **dadurch gekennzeichnet, dass** das halb reflektierende Blättchen zur Reflexion auf dem ersten optischen Weg und zur Übertragung auf dem zweiten optischen Weg verwendet wird.

5. Zielvisier nach den Ansprüchen 2 oder 3, **dadurch gekennzeichnet, dass** das halb reflektierende Blättchen zur Übertragung auf dem ersten optischen Weg und zur Reflexion auf dem zweiten optischen Weg verwendet wird.

6. Zielvisier nach einem der vorhergehenden Ansprüche, **dadurch gekennzeichnet, dass** der Bildverstärker vom Typ mit Bildumkehr ist.

7. Zielvisier nach einem der vorhergehenden Ansprüche, **dadurch gekennzeichnet, dass** das Visier auch einen dritten optischen Weg besitzt, umfassend ein Mikrodisplay (28), das mindestens aus einem Anzeigeelement (282) und einem dritten Bildaufnahmeobjektiv (281), das ein Zwischenbild von dem Bild des Anzeigeelements (282) bildet, besteht, wobei das Zwischenbild durch Reflexion und Übertragung durch das halb reflektierende Blättchen einerseits auf den ersten optischen Weg und andererseits auf den zweiten optischen Weg in Überlagerung über das verstärkte Bild, das vom Bildverstärker (23) kommt, gesandt wird.
